# EUROPÄISCHE PATENTSCHRIFT

(11) **EP 1 896 727 B1**
(45) Veröffentlichungstag und Bekanntmachung des Hinweises auf die Patenterteilung: **12.08.2009**
(21) Anmeldenummer: 06742413.5
(22) Anmeldetag: 13.06.2006
(51) Int. Cl.: F04D 29/04, F04D 29/62, F16C 35/06

(54) **ANORDNUNG UND VERFAHREN ZUR ANORDNUNG EINES PUMPENLAGERS IN/AN KÜHLMITTELPUMPENGEHÄUSEN AUS KUNSTSTOFF**
ASSEMBLY AND METHOD FOR MOUNTING A PUMP BEARING IN/ON PLASTIC COOLANT PUMP HOUSINGS
SYSTEME ET PROCEDE POUR MONTER UN PALIER DE POMPE DANS/SUR DES CARTERS DE POMPES D'AGENTS REFRIGERANTS

(30) Priorität: 30.06.2005 DE 102005030424
(43) Veröffentlichungstag der Anmeldung: 12.03.2008
(73) Patentinhaber: Geräte- und Pumpenbau GmbH, Dr. Eugen Schmidt, 98673 Merbelsrod (DE)
(72) Erfinder: SCHMIDT, Eugen, 98673 Merbelsrod/Thüringen (DE); BLAUROCK, Frank, 98553 Schleusingermeundorf/Thüringen (DE); LEUSENRINK, Hartmut, 98646 Hildburghausen/Thüringen (DE)
(86) Internationale Anmeldenummer: PCT/DE2006/001010
(87) Internationale Veröffentlichungsnummer: WO 2007/003153

(56) Entgegenhaltungen:
- DE-A1- 10 300 611
- DE-A1- 19 720 286
- GB-A- 685 455
- GB-A- 1 437 532
- US-A- 5 765 950

## Beschreibung

Die Erfindung betrifft die Anordnung und ein Verfahren zur Anordnung eines Pumpenlagers in/an Kühlmittelpumpengehäusen aus Kunststoff.

Im Stand der Technik sind Kühlmittelpümpen mit Kunststoffgehäusen vorbeschrieben.

Das Pumpenlager wird bei diesen Bauformen vor dem Spritzgießen im Spritzgießwerkzeug positioniert und während des Spritzgießen lagesicher im Kunststoffgehäuse integriert.

Diese Variante der Lagerbefestigung hat die Nachteile, dass das Pumpenlager während des Spritzgießens Temperaturen von bis zu 300 °C ausgesetzt wird und dadurch thermisch sehr hoch belastet wird.

Während des Abkühlvorganges werden die Lagerhülsen dann im Kunststoff radial verspannt und dabei oftmals sogar deformiert.

In nachgelagerten Arbeitsgängen müssen die Lager dann eingefettet und abgedichtet werden.

Neben einem damit verbundenen erhöhten Fertigungs- und Montageaufwand haben die Kunststoffkühlmittelpumpen mit eingespritzten Pumpenlager den weiteren Nachteil, daß die als Pumpenlager zum Einsatz kommenden Lager, infolge der technologisch bedingten Verspannung des Außenringes im Kunststoff, ein relativ großes Lagerspiel aufweisen müssen.

Dieses hohe Lagerspiel hat zwangsläufig einen großen "Wellenschlag" zur Folge, welcher die vom Wellendichtring zu übernehmende Wellenabdichtung erschwert, den Montageaufwand erhöht, die Lebensdauer des Lagers reduziert, und zudem erhöhte Laufgeräusche hervorbringt.

Ein anderer Nachteil von Kühlmittelpumpen mit im Kunststoffgehäuse eingespritzter Lagerung besteht darin, daß diese Kunststoffgehäuse infolge der integrierten Pumpenlager nicht getempert werden können, da beim Tempern der Kunststoff auf 180° C bis 200° C erhitzt wird, so dass die nicht getemperten Kunststoffe gegenüber getemperten Kunststoffen zwangsläufig eine niedrigere Festigkeit aufweisen.

Darüber hinaus ist eine Trennung der eingespritzten Stahllager vom Kunststoff des Gehäuses zerstörungsfrei nicht möglich, so dass eine Wiederaufarbeitung der Lagergehäuse ausgeschlossen ist.

Zudem ist das Recycling von Kunststoffgehäusen mit eingespritzten Pumpenlagern sehr kostenaufwendig, da die Trennung der eingespritzten Lager vom Kunststoff des Gehäuses zwangsläufig einen erhöhten Zeit- und/oder Arbeitsaufwand erfordert.

Andererseits sind, wie beispielsweise in der DE 197 20 286 A1 Lageranordnungen in Kunststoffgehäusen von Kühlmittelpumpen vorbeschrieben bei denen die gesamte Mantelfläche des Pumpenlagers im zugehörigen Kunststoffgehäuse eingeklebt ist.

Dabei werden durch den zur Übertragung der axialen Lagerbelastungen erforderlichen Klebespalt zwischen dem Kunststoffgehäuse und dem Lageraußenmantel Fertigungs- und Montagetoleranzen vorgegebenen.

Diese für den erforderlichen Klebespalt zwingend erforderlichen Fertigungs- und Montagetoleranzen beeinflussen jedoch wesentlich die Dichtspaltgeometrie zwischen dem Pumpenrad und der zugeordneten Gehäusebohrung und erhöhen den Leckagestrom als wesentliche Einflussgröße für den Wirkungsgrad der Kühlmittelpumpe, so dass bei Kühlmittelpumpen mit eingeklebten Pumpenlagern (bei vertretbarem Fertigungs- und/oder Montageaufwand) entweder nur geringe Lagerbelastungen auf das Pumpengehäuse übertragen können, oder die Klebespalte so ausgelegt sind, dass hohe Lagerbelastungen auf das Pumpengehäuse übertragen können. Diese letztgenannten Kühlmittelpumpen weisen jedoch dann zwangsläufig einen niedrigeren Wirkungsgrad auf.

In der DE 103 00 6 11 A1 wurde seitens der Anmelderin eine zwischenzeitlich bereits bewährte Lageranordnung für Pumpenlager in/an Kühlmittelpumpengehäusen aus Kunststoff mit axialer Lageranlage vorgestellt, bei der einerseits im Kühlmittelpumpengehäuse eine mit einer Einlassbohrung versehene radiale Gehäuserille angeordnet ist, und andererseits an dem im Lagersitz anzuordnenden Lagerring eine im Endmontagezustand der Gehäuserille gegenüberliegend angeordnete Lagerrille eingebracht ist.

Über die Einlassbohrung wird dann beispielsweise Polyamid im flüssigen Zustand in den zwischen dem Kühlmittelpumpengehäuse und dem Lagering von der Gehäuserille und der Lagerrille gebildeten Hohlraum eingebracht.

Nach dem Aushärten des Polyamids bildet sich im Hohlraum zwischen der Gehäuserille und der Lagerrille ein sowohl mit dem Kühlmittelpumpengehäuse wie auch mit dem Lagerring verbundener, eingespritzter Kunststoffring aus.

Diese in der Praxis bereits bewährte Bauform erfordert jedoch zur Herstellung des "Klebstoffringes" einen erhöhten Fertigungsaufwand, da zur "Herstellung" des Klebstoffringes in den Kunststoffgehäusen die umlaufenden Gehäuserillen wie auch die zum "Befüllen dieser Gehäuserillen" erforderlichen Bohrungen nachträglich mechanisch eingebracht werden müssen.

Die im Kunststoffgehäuse der Kühlmittelpumpe anzuordnende radiale Gehäuserille bewirkt, dass durch die Anordnung dieser Gehäuserille der Lagerhals geschwächt wird, so dass unter extremen Riemenlasten an dieser Stelle eine Bruchgefahr besteht.

Andererseits erfordert das Einspritzen des Polyamides über die Einlassbohrung in den von Gehäuserille und Lagerrille gebildeten ringförmigen Zwischenraum eine genaue Dosierung der Einspritzmenge wie auch gleichzeitig eine exakte Kontrolle der Befüllung, da das Polyamid beispielsweise axial in Richtung des Wellendichtringes abfließen kann, woraus unter anderem eine Beeinträchtigung der Funktionsfähigkeit des Radialdichtringes bzw. der Gleitringdichtung resultieren kann, oder aber, dass eine unvollständige Befüllung der Ringnut die erwünschte axiale wie auch radiale Sicherung des Lagers im Kunststoffgehäuse deutlich einschränkt.

Die in Verbindung mit der Einlassbohrung und der Gehäuserille in den Unteransprüchen der vorgenannten Anmeldung vorgeschlagene Anordnung von Stegen in der Lagerbohrung des Kunststoffgehäuses mit dazwischenliegenden Stegnuten führte jedoch in der praktischen Umsetzung nicht zu der erwünschten Festigkeit der Klebverbindung, da eine vollständige Befüllung der Ringnut und der Stegnuten mit dem zähflüssigen Klebstoff nicht gewährleistet werden konnte. Daher konnte sich in der Praxis nur die Lösung mit einer in eine Ringnut mündenden Einlassbohrung durchsetzen.

Infolge der zuvor beschriebenen Mängel dieser Lösung war es daher notwendig die Anordnung von Pumpenlagern in/an Kühlmittelpumpengehäusen aus Kunststoff konsequent weiterzuentwickeln.

Der Erfindung liegt daher die Aufgabe zugrunde, eine einfach herstell- und montierbare Anordnung sowie ein kostengünstiges und fertigungstechnisch einfaches Verfahren zur Anordnung von Pumpenlagern in/an Kühlmittelpumpengehäusen aus Kunststoff zu entwickeln, welche/s die vorgenannten Nachteile des Standes der Technik nicht aufweist, das Tempern der Kunststoffgehäuse und den Einsatz von Lager mit kleinem Lagerspiel sowie all den daraus resultierende Vorteilen, wie einer erhöhten Lebensdauer, einer geringeren Geräuschentwicklung, einer Entlastung des Wellendichtringes, bzw. der Gleitringdichtung u.a.m., ermöglicht darüber hinaus mit minimalem Fertigungs- und Montageaufwand bei optimaler Dichtspaltgeometrie und hohem Pumpenwirkungsgrad eine großflächige, gleichmäßig verteilte Binde-/ Haftfestigkeit zwischen dem Pumpenlager auf dem Pumpengehäuse gewährleistet, so dass ohne Beeinträchtigung der Stabilität des Lagerhalses eine hohe Kraftübertragung vom Pumpenlager auf das Pumpengehäuse gewährleistet ist.

Erfindungsgemäß wird diese Aufgabe durch die erfindungsgemäße Anordnung und das erfindungsgemäße Verfahren zur Anordnung eines mit mindestens einer Lagerrille (1) versehenen Lagerringes (2) eines Pumpenlagers (3) in/an einem Lagersitz (4) eines Kühlmittelpumpengehäusen (5) aus Kunststoff nach den Merkmalen der unabhängigen Ansprüche der Erfindung gelöst.

Kennzeichnend ist dabei, dass ein mit mindestens einer Lagerrille (1) versehener Lagerring (2) eines Pumpenlagers (3) in/an einem Lagersitz (4) eines Kühlmittelpumpengehäuses (5) aus Kunststoff mit einem axialen Lagerbund (6), und mehreren am Lagersitz (4) angeordneten Positionierstegen (7), sich dadurch auszeichnet, dass zwischen den Positionierstege (7) und dem Lagerbund (6) voneinander getrennte, d.h. separate Klebstoffnuten (8) angeordnet sind die in jeweils vier der Achsrichtungen mit flüssigkeitsdichten Wandungen (9) versehenen sind, d.h. untereinander keine Verbindungskanäle aufweisen, und lediglich in Richtung des oberhalb dieser Klebstoffnuten (8) anzuordnenden Lagerringes (2) des Pumpenlagers (3) eine Öffnung aufweisen und zudem im Bereich des äußeren Randes des Pumpenlagers (3) schlitzförmige Klebstofftaschen (10) besitzen.

Die Positionierstege (7) dienen der Vereinfachung des zum Fügen erforderlichen Fertigungs- und Montageaufwand, da auf Grund der unterbrochen gestalteten Mantelfläche des Lagersitzes (4) eine für das Pumpenlager (3) unschädliche Vorspannung während der Montage möglich wird.

Die zwischen den Positionierstegen (7) eingearbeiteten "flüssigkeitsdichten" Klebstoffnuten (8) gewährleisten beim nachfolgenden Erhitzen und Aushärten des Klebstoffes, in Verbindung mit der/den die Klebstoffnuten (8) untereinander verbindenden Lagerrille/n eine gleichmäßige Verteilung des Klebstoffes, so dass stets eine großflächige, gleichmäßig verteilte Binde-/ Haftfestigkeit zwischen dem Pumpenlager und dem Pumpengehäuse gewährleistet ist.

Mittels der Klebstofftaschen (10) kann eine Klebstoffreserve und gleichzeitig eine "offene" Anbindung der Klebstoffnuten (8) an die Umgebung des Kühlmittelpumpengehäuses gewährleistet werden, so dass eine optimale Entlüftung aller Klebstoffnuten (8) und der Lagerrille (1) gewährleistet ist, und so eine optimale Befüllung aller Klebefugen, und dadurch eine optimale kraftschlüssige Klebeverbindung des Lagers mit dem Kunststoffgehäuse, bewirkt werden kann.

Ein weiteres Merkmal der Erfindung besteht darin, dass die Positionierstege (7) mit den zwischen diesen angeordneten Klebstoffnuten (8) parallel zur Achsrichtung des Pumpenlagers (3), schräg zur Achsrichtung des Pumpenlagers (3) und/oder bogenförmig zur Achsrichtung des Pumpenlagers (3) angeordnet sein können.

Die Form der Gestaltung der Positionierstege (7) und den zwischen den Positionierstege (7) angeordneten Klebstoffnuten (8) vereinfacht durch ein optimales Entformen beim Spritzgießen den Fertigungsprozess und ermöglicht zudem einer weiteren Erhöhung der zwischen dem Pumpenlager (3) und dem

Kühlmittelpumpengehäuse (5) übertragbaren Lagerkräfte.

Erfindungsgemäß wird zur Verbindung des Pumpenlagers (3) mit dem Kunstoffgehäuse der Kühlmittelpumpe zunächst Klebstoff auf die zu fügende Zylinderfläche und/oder die Lagerrille (1) des Lagerringes (2) und/oder in/ auf den mit Positionierstegen (7) versehenen Lagersitz (4) aufgebracht.

Dabei kann der Klebstoff erfindungsgemäß beispielsweise mittels einer oder mehrerer nebeneinander angeordneter, mit Druckluft angesteuerter Dosierspritzen auf den zu fügenden Außenmantel der in einer Drehvorrichtung eingespannten Baueinheit der Lageranordnung ringförmig, exakt positioniert in vorgegebenen Mengen aufgetragen werden.

Erfindungswesentlich ist auch, dass im Innenmantel der anderen, mit der vorgenannten Baueinheit zu fügenden Baugruppe der Lageranordnung, mittels einer im vertikal angeordneten Ringmantel dieser Baueinheit senkrecht verfahrbaren, von einer Dosierspritze beaufschlagten Schleuderscheibe, Klebstoff ebenfalls in exakt vorgegebenen Mengen gleichmäßig verteilt aufgetragen wird.

Kennzeichnend ist auch, dass anschließend an diesem erfindungsgemäß dosierten Klebstoffauftrag der zu fügende Lagerring (2) bis zur Anlage am Lagerbund (3) in/auf den von Positionierstegen (7) gebildeten Lagersitz (4) "gepresst" wird.

Erfindungsgemäß ist in diesem Zusammenhang auch, dass das im/am Kühlmittelpumpengehäuse (5) aus Kunststoff angeordnete an den Fügeflächen mit Klebstoff benetzte Pumpenlager (3) anschließend mit nach oben gerichteten Klebstofftaschen (10) ca. 2 bis 10 Sekunden lang induktiv, mittels einer am Außenmantel der Fügepaarung angeordneten Induktionsspule, erhitzt wird. Dabei wird der Mantel des Pumpenlagers (3) ca. 0,8 bis maximal 1,2 mm tief auf ca. 100° C bis 125° C komplett erwärmt und dadurch der Einsatz findende Klebstoff so verflüssigt, dass auch der beim Fügen in den Klebstofftaschen (10) verbleibende Klebstoff "wässrig" wird und in die Klebstoffnuten hineinläuft.

Dabei werden diese vollständig ausfüllt, da über die Lagerrille (1) ein in allen Klebstoffnuten (8) am Umfang des Lagerringes (2) gleichmäßiger "Klebstoff-Flüssigkeitsstand" bewirkt wird.

Das induktiv am Mantel komplett erwärmte Kugellager gibt nach der kurzzeitigen induktiven Erwärmung des Außenmantels diese Wärme sehr schnell nach "innen", d.h. in das Pumpenlager hinein ab, so dass der in die Klebstofffugen, d.h. den Klebstoffnuten (8) und der Lagerrille (1) eingebrachte Klebstoff trotz der kurzzeitig hohen Temperatur des Mantels des Pumpenlagers nicht verschäumt, d.h. dass in den Klebstofffugen der Siedepunkt des Klebstoffes nicht überschritten wird.

Gleichzeitig wird dadurch eine optimale Aushärtetemperatur über die gesamte Aushärtezeit des Klebstoffes erzielt.

Nach dem erfindungsgemäßen Aushärten des Klebstoffes, beispielsweise eines warmhärtenden Zweikomponentenklebers, ist infolge der erfindungsgemäßen Lösung bei optimaler Dichtspaltgeometrie und hohem Pumpenwirkungsgrad auf Grund der erfindungsgemäß Lösung mit den infolge der erfindungsgemäßen Lösung vollständig mit ausgehärteten Klebstoff gefüllten, großflächigen Klebstoffnuten (8) mit der diese Klebstoffnuten (8) umschließenden Lagerrille (1) eine gleichmäßig verteilten Binde-/ Haftfestigkeit gewährleistet, wodurch eine hohe radiale und axiale Kraftübertragung vom Pumpenlager auf das Pumpengehäuse möglich wird.

Vorteilhaft ist, da das Lager erst nach dem Spritzgießen mit minimalem Fertigungs- und Montageaufwand mit dem Kühlmittelpumpengehäuse (5) verbunden wird, dass die Materialeigenschaften der Kunststoffgehäuse durch Tempern deutlich verbessert werden können.

Da zudem bei der Bemessung der Passung zwischen dem Lager und dem Lagersitz des Kühlmittelpumpengehäuse (5) lediglich Presssitze, jedoch keine Klebespaltmaße zu berücksichtigen sind, kann mit minimalem Fertigungs- und Montageaufwand eine optimale Dichtspaltgeometrie zwischen dem Pumpenrad und der Gehäusebohrung, und somit stets ein hoher Pumpenwirkungsgrad gewährleistet werden:

Da die Lager erfindungsgemäß weder eingespritzt noch fest verspannt werden und daher eine Deformation der äußeren Lagerringe der Pumpenlager im Kühlmittelpumpengehäuse (5) vermieden wird, können auch Pumpenlager (3) mit kleinem Lagerspiel und all den daraus resultierenden Vorteilen, wie beispielsweise einer mit dem geringeren Lagerspiel verbundenen Entlastung des Wellendichtringes bzw. der Gleitringdichtung, einer erhöhte Lebensdauer, einer geringeren Geräuschentwicklung, u.a.m. als Pumpenlager eingesetzt werden.

Infolge der Kombination der Klebstoffnuten (8) mit der ebenfalls mit Klebstoff gefüllten ringförmig umlaufenden über die Lagerrille (1) wird nicht nur eine gleichmäßige Befüllung aller Klebstoffnuten 8 gewährleistet, sondern es können sowohl hohe Radialkräfte wie auch hohe Axialkräfte problemlos vom Pumpenlager (3) auf das Kühlmittelpumpengehäuse (5) übertragen werden.

Zudem ist durch ein definiertes Brechen der Klebeverbindung eine einfache Demontage des Pumpenlagers möglich, so dass neben dem Aufwand für die Fertigung und die Montage auch der Aufwand für das Recycling deutlich reduziert werden kann.

Weitere Einzelheiten und Merkmale der Erfindung ergeben sich aus der Beschreibung des erfindungsgemäßen Ausführungsbeispieles in Verbindung mit den Ansprüchen sowie den Zeichnungen zur erfindungsgemäßen Lösung.

Nachfolgend wird die Erfindung daher an Hand eines Ausführungsbeispiele in Verbindung mit zwei Figuren näher erläutert.

Dabei zeigen :
- Figur 1 :: eine mögliche Bauform der erfindungsgemäßen Anordnung in der Seitenansicht, im Schnitt;
- Figur 2 :: den Schnitt bei X-X, gemäß Figur 1.

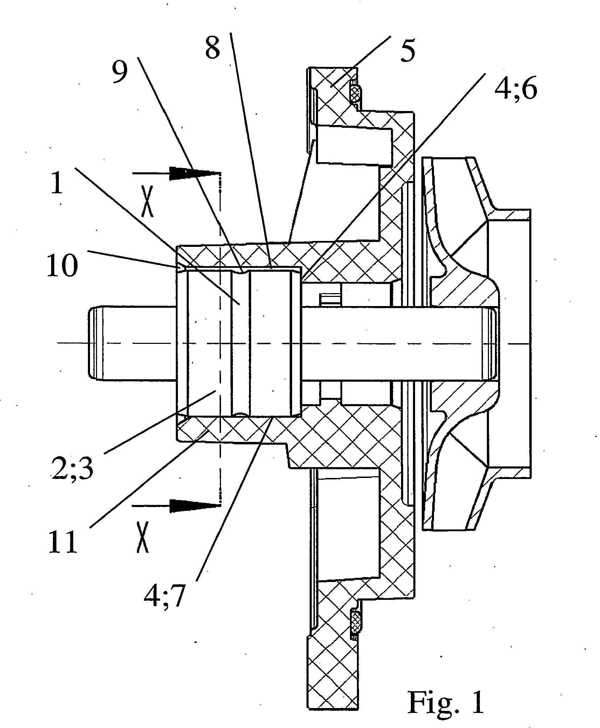

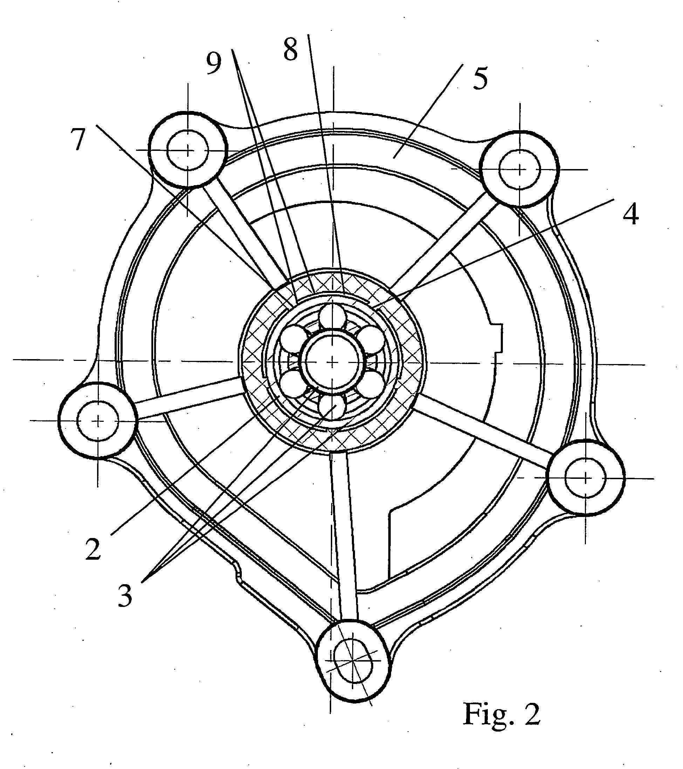

In der Figur 1 ist eine der möglichen Bauformen der erfindungsgemäßen, Anordnung in der Seitenansicht, im Schnitt dargestellt. Die Figur 2 zeigt den zugehörigen Schnitt bei X-X, gemäß Figur 1.

Dabei ist ein mit mindestens einer Lagerrille 1 versehener Lagerring 2 eines Pumpenlagers 3 in einem Lagersitz 4 eines Kühlmittelpumpengehäuses 5 aus Kunststoff angeordnet. Der Lagersitz 4 wird von mehreren Positionierstegen 7 in Verbindung mit einem axialen Lagerbund 6 gebildet.

Zwischen den Positionierstegen 7 und dem Lagerbund 6 sind voneinander getrennte, d.h. separate Klebstoffnuten 8 angeordnet die jeweils in vier der Achsrichtungen mit flüssigkeitsdichten Wandungen (9) versehenen sind, d.h. sie weisen untereinander keine Verbindungskanäle auf.

Nur oberhalb dieser Klebstoffnuten 8, d.h. im Bereich des dort anzuordnenden Lagerringes 2 des Pumpenlagers 3, wie zudem am äußeren Rand des Pumpenlagers 3, im Bereich der schlitzförmige Klebstofftaschen 10, sind die Klebstoffnuten "offen".

Die Positionierstege 7 dienen zudem der Vereinfachung des zum Fügen erforderlichen Fertigungs- und Montageaufwand, da auf Grund der unterbrochen gestalteten Mantelfläche des Lagersitzes 4 eine für das Pumpenlager 3 unschädliche Vorspannung während der Montage möglich wird. Dabei dichtet der Das im Lagersitz, d.h. am Lagerbund 6 und an den Positionierstegen 7 anliegende Pumpenlager 3 dichtet die über die Lagerrille 1 miteinander verbundenen Klebstoffnuten 8 bis zu den Klebstofftaschen 10 hin ab.

Diese erfindungsgemäßen Klebstoffnuten 8 gewährleisten beim nachfolgenden Erhitzen und Aushärten des Klebstoffes, in Verbindung mit der die Klebstoffnuten 8 untereinander verbindende Lagerrille 1 eine großflächige, stets gleichgroße, maximale Klebefläche mit gleichmäßig verteilter Haftfestigkeit, d.h. ohne jegliche Lufteinschlüsse, so dass ohne Beeinträchtigung der Stabilität des Lagerhalses stets eine hohe Kraftübertragung vom Pumpenlager 3 auf das Kühlmittelpumpengehäuse gewährleistet ist.

Mittels der Klebstofftaschen 10 wird dabei einerseits eine Klebstoffreserve und zudem gleichzeitig eine "offene" Anbindung der Klebstoffnuten 8 an die Umgebung des Kühlmittelpumpengehäuses gewährleistet, so dass auch eine optimale Entlüftung aller Klebstoffnuten 8 wie auch der Lagerrille 1 gewährleistet werden kann.

Zudem wird mittels der Klebstofftaschen 10 eine optimale Befüllung aller Klebefugen und somit eine optimale kraftschlüssige Klebeverbindung des Lagers mit dem Kunststoffgehäuse erzielt.

Die Positionierstege 7 mit den zwischen diesen angeordneten Klebstoffnuten 8 sind im vorliegenden Ausführungsbeispiel parallel zur Achsrichtung des Pumpenlagers 3 angeordnet.

Zur Verbindung des Pumpenlagers 3 mit dem Kunstoffgehäuse der Kühlmittelpumpe wird zunächst ein warmhärtender Zweikomponentenklebstoff sowohl auf die zu fügende Zylinderfläche wie auch in die Lagerrille 1 des Lagerringes 2 aufgebracht.

Dieser Klebstoff wird dabei mittels zwei nebeneinander angeordneter, mit Druckluft angesteuerter Dosierspritzen auf den zu fügenden Außenmantel der in einer Drehvorrichtung eingespannten Baueinheit des Pumpenlagers exakt dosiert ringförmig aufgetragen.

Gleichzeitig wird am Innenmantel des mit Positionierstegen 7 versehenen Lagersitzes 4 mittels einer vertikal im senkrecht angeordneten Innenmantel verfahrbaren, von einer Dosierspritze beaufschlagten Schleuderscheibe Klebstoff in exakt vorgegebenen Mengen gleichmäßig verteilt aufgetragen.

Anschließend an diesem erfindungsgemäßen, dosierten Klebstoffauftrag wird der zu fügende Lagerring 2 bis zur Anlage am Lagerbund 3 in/auf den von Positionierstegen 7 gebildeten Lagersitz 4 gepresst.

Da auf Grund des die Klebstoffnuten 8 nach unten abdichtenden Lagerbundes der Klebstoff nur nach oben austreten kann, sammelt sich der beim "Einschieben" des (ringförmig mit Klebstoff versehenen) Lagerringes 2 in den mit Klebstoff benetzten Lagersitz 4 austretende Klebstoff in den Klebstofftaschen 10.

Anschließend wird die zuvor gefügte Baugruppe mit nach oben gerichteten Klebstofftaschen 10 fünf Sekunden lang induktiv, mittels einer am Lagerhals 11 des Kühlmittelpumpengehäuses 5 angeordneten Induktionsspule erhitzt.

Dabei wird der Mantel des Pumpenlagers 3 komplett ca. 2 mm tief auf 120° C erwärmt und dabei der eingesetzte warmhärtende Zweikomponentenklebstoff so verflüssigt, dass der beim Fügen in die Klebstofftaschen 10 eingetretene Klebstoff wässrig wird und in die Klebstoffnuten hineinläuft, dabei diese vollständig ausfüllt und über die Lagerrille 1 zu einen in allen Klebstoffnuten 8 am Umfang des Lagerringes 2 gleichmäßigen "Klebstoff-Flüssigkeitsstand" führt.

Das so induktiv zunächst nur "außen" erwärmte Kugellager gibt nach dieser kurzzeitigen induktiven Erwärmung die Wärme nun relativschnell nach "innen" ab, so dass der in die Klebstofffugen, d.h. die Klebstoffnuten 8 und die Lagerrille 1 eingebrachte Klebstoff trotz dieser kurzzeitig sehr hohen Temperatur am Mantel des Pumpenlagers nicht verschäumt, d.h., dass der Siedepunkt des Klebstoffes in den Klebstofffugen nicht überschritten wird.

Gleichzeitig wird durch die im Kugellager gespeicherte und durch das Kunststoffgehäuse "isolierte" Wärmemenge eine optimale Aushärtetemperatur über die gesamte Aushärtezeit (von ca. 1 Minute) des Klebstoffes in den Klebstofffuge gewährleistet, so dass nach dem erfindungsgemäßen Aushärten des warmhärtenden Zweikomponentenklebers, auf Grund der erfindungsgemäßen Lösung eine gleichmäßig verteilten Binde-/ Haftfestigkeit gewährleistet ist, und bei optimaler Dichtspaltgeometrie und hohem Pumpenwirkungsgrad ohne Beeinträchtigung der Stabilität des Lagerhalses eine hohe Kraftübertragung vom Pumpenlager auf das Pumpengehäuse infolge der erfindungsgemäßen Lösung möglich ist.

Da das Lager erst nach dem Spritzgießen mit minimalem Fertigungs- und Montageaufwand mit dem Kühlmittelpumpengehäuse 5 verbunden wird, ist es auch möglich die Materialeigenschaften der Kunststoffgehäuse durch Tempern deutlich zu verbessern.

Da bei der Bemessung der Passung zwischen dem Lager und dem Lagersitz des Kühlmittelpumpengehäuse 5 lediglich Presssitze, und keine Klebespaltmaße zu berücksichtigen sind, kann mit minimalem Fertigungs- und Montageaufwand eine optimale Dichtspaltgeometrie zwischen dem Pumpenrad und der Gehäusebohrung, und damit ein hoher Pumpenwirkungsgrad gewährleistet werden.

Da erfindungsgemäß die Lager zudem weder eingespritzt noch fest verspannt werden, wird eine Deformation der äußeren Lagerringe der Pumpenlager im Kühlmittelpumpengehäuse 5 generell vermieden, so dass Pumpenlager 3 mit kleinem Lagerspiel und all den daraus resultierenden Vorteilen, wie beispielsweise einer mit dem geringeren Lagerspiel verbundenen Entlastung des Wellendichtringes bzw. der Gleitringdichtung, einer erhöhte Lebensdauer, einer geringeren Geräuschentwicklung, u.a.m. eingesetzt werden können.

Aufgrund der Kombination der erfindungsgemäßen "flüssigkeitsdichten" Klebstoffnuten 8 mit einer ebenfalls mit Klebstoff gefüllten ringförmig umlaufenden über die Lagerrille 1 kann nicht nur eine gleichmäßige Befüllung aller Klebstoffnuten gewährleistet werden, sondern es können neben hohen Radialkräften auch hohe Axialkräfte mühelos vom Pumpenlager 3 auf das Kühlmittelpumpengehäuse 5 übertragen werden.

Zudem ist durch ein definiertes Brechen der Klebeverbindung eine einfache Demontage des möglich, so dass neben dem Aufwand für die Fertigung und die Montage auch der Aufwand für das Recycling deutlich reduziert werden kann.

### Bezugszeichenzusammenstellung

- 1: Lagerrille
- 2: Lagerring
- 3: Pumpenlager
- 4: Lagersitz
- 5: Kühlmittelpumpengehäuse
- 6: Lagerbund
- 7: Positioniersteg
- 8: Klebstoffnut
- 9: Wandung
- 10: Klebstofftaschen
- 11: Lagerhals

## Patentansprüche

1. Anordnung eines mit mindestens einer Lagerrille (1) versehenen Lagerringes (2) eines Pumpenlagers (3) in einem Lagersitz (4) bzw. auf einem Lagersitz (4) eines Kühlmittelpumpengehäuses (5) aus Kunststoff mit einem axialen Lagerbund (6), sowie mehreren am Lagersitz (4) angeordneten Positionierstegen (7), **dadurch gekennzeichnet, dass** sich zwischen diesen Positionierstegen (7) und dem Lagerbund (6) separate Klebstoffnuten (8) befinden die in jeweils vier der Achsrichtungen mit flüssigkeitsdichten Wandungen (9) versehenen sind, in Richtung des Lagerringes (2) des Pumpenlagers (3) eine Öffnung aufweisen und zudem im Bereich des äußeren Randes des Pumpenlagers (3) schlitzförmige Klebstofftaschen (10) besitzen.

2. Anordnung eines Pumpenlagers (3) nach Anspruch 1, **dadurch gekennzeichnet, daß** die Positionierstege (7) mit den zwischen diesen angeordneten Klebstoffnuten (8) parallel zur Achsrichtung des Pumpenlagers (3) angeordnet sind.

3. Anordnung eines Pumpenlagers (3) nach Anspruch 1, **dadurch gekennzeichnet, daß** die Positionierstege (7) mit den zwischen diesen angeordneten Klebstoffnuten (8) schräg zur Achsrichtung des Pumpenlagers (3) angeordnet sind.

4. Anordnung eines Pumpenlagers (3) nach Anspruch 1, **dadurch gekennzeichnet, daß** die Positionierstege (7) mit den zwischen diesen angeordneten Klebstoffnuten (8) bogenförmig zur Achsrichtung des Pumpenlagers (3) angeordnet sind.

5. Verfahren zur Anordnung eines Pumpenlagers (3) in/an Kühlmittelpumpengehäusen (5) aus Kunststoff, mit einem axialen Lagerbund (6), **dadurch gekennzeichnet, dass** ein Klebstoff auf die zu fügende Zylinderfläche und/oder die Lagerrille (1) des Lagerringes (2) und/oder in/auf den mit Positionierstegen (7) versehenen Lagersitz (4) verteilt aufgebracht wird, anschließend wird der zu fügende Lagerring (2) bis zur Anlage am Lagerbund (6) in/auf den von Positionierstegen (7) gebildeten Lagersitz (4) gepresst, nachfolgend wird das im Kühlmittelpumpengehäuse (5) aus Kunststoff angeordnete Pumpenlager (3) bei nach oben gerichteten Klebstofftaschen (10) ca. 2 bis 10 Sekunden lang induktiv auf ca. 100° C bis 125° C erhitzt.

## Claims

1. Assembly of a provided bearing ring (2) of a pump bearing (3) provided with at least one bearing groove (1) in a bearing seating (4) and/or in a bearing seating (4) of a plastic coolant pump housing (5) with an axial bearing sleeve (6) and also several spacers (7) assembled around the bearing seating (4), **characterized by** the fact that there are separate adhesive grooves (8) between these spacers (7) in the four respective axial directions, provided with watertight walls (9). There is an opening in the direction of the bearing ring (2) of the pump bearing (3) and there are also slotted-type adhesive pockets (10) in the outer edge area of the pump bearing (3),

2. Assembly of a pump bearing (3) in accordance with claim 1, **characterized by** the fact that the spacers (7) are assembled parallel to the axial direction of the pump bearing (3) with the adhesive grooves (8) fitted between these items.

3. Assembly of a pump bearing (3) in accordance with claim 1, **characterized by** the fact that the spacers (7) are assembled in a position slanting towards the axial direction of the pump bearing (3) with the adhesive grooves (8) assembled between these items.

4. Assembly of a pump bearing (3) in accordance with claim 1, **characterized by** the fact that the spacers (7) are assembled in a position forming a curve towards the axial direction of the pump bearing (3) with the adhesive grooves (8) assembled between these items.

5. A method for mounting a pump bearing (3) in the plastic coolant pump housings (5) with an axial bearing sleeve (6), **characterized by** the fact that adhesive can be spread over the cylinder surface to be glued and/or the bearing groove (1) of the bearing ring (2) and/or in/over on the bearing seating (4) provided with spacers (7): the bearing ring (2) to be glued is then pressed to the plant at the bearing sleeve (6) into/on to the bearing seating (4) formed by the spacers (7): the pump bearing (3) assembled into plastic coolant pump housing (5) is then heated up by induction for approximately 2 to 10 seconds, with the adhesive pockets (10) pointing upwards at approximately 100° to 125° C.

## Revendications

1. Système d'une bague de palier (2) équipée d'au moins une gorge de roulement (1) d'un palier de pompe (3) dans un logement de palier (4) voire sur un logement de palier (4) d'un carter de pompe d'agent réfrigérant (5) en matière plastique avec un collet de palier axial (6) ainsi que plusieurs traverses de positionnement (7) disposés sur le logement de palier (4) **caractérisé par le fait que** des rainures de colle (8) séparées se trouvent entre ces traverses de positionnement (7) et le collet de palier (6), ces rainures étant équipées de parois étanches (9) dans resp. quatre des directions d'axe, ces rainures présentant une ouverture en direction de la bague de palier (2) du palier de pompe (3) et possédant de plus dans la zone du bord extérieur du palier de pompe (3) des poches de colle (10) en forme de fente.

2. Système d'un palier de pompe (3) selon l'exigence 1 **caractérisé par le fait que** les traverses de positionnement (7) sont disposées avec les rainures de colle (8) placées entre eux parallèlement à la direction d'axe du carte de pompe (3).

3. Système d'un palier de pompe (3) selon l'exigence 1 **caractérisé par le fait que** les traverses de positionnement (7) sont disposées avec les rainures de colle (8) placées entre elles en biais par rapport à la direction d'axe du palier de pompe (3).

4. Système d'un palier de pompe (3) selon l'exigence 1 **caractérisé par le fait que** les traverses de positionnement (7) sont disposées avec les rainures de colle (8) placées entre elles en arc de cercle par rapport à la direction d'axe du palier de pompe (3).

5. Procédé pour monter un palier de pompe (3) dans /sur des carters de pompes d'agent réfrigérants (5) en matière plastique avec un collet de palier axial (6) **caractérisé par le fait qu'**un adhésif est réparti sur la surface cylindrique à assembler et/ou la gorge de roulement (1) de la bague de palier (2) et/ou dans/sur le logement de palier (4) équipé de traverses de positionnement (7), la bague de palier (2) à assembler étant ensuite pressée jusqu'au dispositif sur le collet de palier (6) dans/sur le logement de palier (4) formé par les traverses de positionnement (7), le palier de pompe (3) disposé dans le carter de pompe d'agents réfrigérants (5) en matière plastique étant par la suite chauffé de manière inductive pendant approx. 2 à 10 secondes à une température d'approx. 100°C à 125°C avec les poches de colle (10) dirigées vers le haut.
